# EUROPEAN PATENT APPLICATION

(11) **EP 0 792 005 A1**
(43) Date of publication of application: **27.08.1997**
(21) Application number: 96930378.3
(22) Date of filing: 12.09.1996
(51) Int. Cl.: H02K 41/03, H02K 41/02, B65G 54/02

(54) **LINEAR MOTOR DRIVING TYPE FEEDING DEVICE**

(30) Priority: 12.09.1995 JP 234013/95; 14.12.1995 JP 325644/95
(71) Applicant: FANUC LTD., Minamitsuru-gun, Yamanashi 401-05 (JP)
(72) Inventor: NAKATA, Yoshinori, Minamitsuru-gun, Yamanashi 401-03 (JP); MORI, Atsushi, Fanuc Dai-3 Vira-karamatsu, Minamitsuru-gun, Yamanashi 401-05 (JP); SOGABE, Masatoyo, Gotenba-shi, Shizuoka 412 (JP)
(74) Representative: Billington, Lawrence Emlyn
(86) International application number: JP9602610
(87) International publication number: WO9710641

(57) **Abstract**

A linear motor (20), constituted by armature coils within a movable slider (24) and a fixed magnet body (22), drives the movable slider (24) and a driven body of a laser machining apparatus fixed to the movable slider (24) in a linear direction. The magnetic attraction force occurring between the movable slider (24) and the fixed magnetic body (22) is canceled by a magnetic attraction force generated between a magnet body for compensation (32), separately provided on the upper face of the driven body (14), and a stationary magnetic body (34) disposed thereabove. Thus, frictional resistance occurring with linear guiding means (16a, 16b) can be alleviated during the motion of the driven body (14).

## Description

### Technical Field

The present invention relates to a feed device of a linear motor drive type which is effective particularly when applied to a feed device where linear feeding of a moving body such as a table or the like in a laser machining device is directly driven by a linear motor.

### Background Art

In a machine tool or a machining device, machining is carried out by moving a machining unit or a movable body such as a work table or the like by a feed device in accordance with a machining program. Normally, in moving a movable body along a predetermined path on a plane (X-Y plane), a rotational type servo motor for moving a table in X-axis direction and a rotational type servo motor for moving the table in Y-axis direction are used.

For example, in a laser machining device, a laser machining unit having an emitting unit of a laser beam for machining is fixed to a movable unit of a feed device and the laser machining unit is moved along a predetermined machining path on X-Y plane by moving it in both directions of X-axis and Y-axis whereby laser machining such as cutting, deburring, welding or the like is carried out for a work on a work table by the laser beam for machining emitted from the emitting unit of the laser beam for machining.

In such a feed device driven by a rotational servo motor as described above, the rotation of a servo motor is converted into a feed motion in a linear direction of the machining unit or the work table through a feed mechanism comprising a ball screw mechanism, a rack/pinion mechanism or the like. However, a ball screw mechanism or a rack & pinion mechanism or the like, by being interposed between a servo motor as a driving source and a movable body (work table) driven by the servo motor, become hindrances to high-speed and accurate movement of the driven body along the predetermined path due to the inertia of these members or the mechanical rigidity thereof, by which the improvement in machining efficiency is hampered. Also, a mechanism requiring a large number of fine machine parts makes an assembling work complex, causing high manufacturing cost.

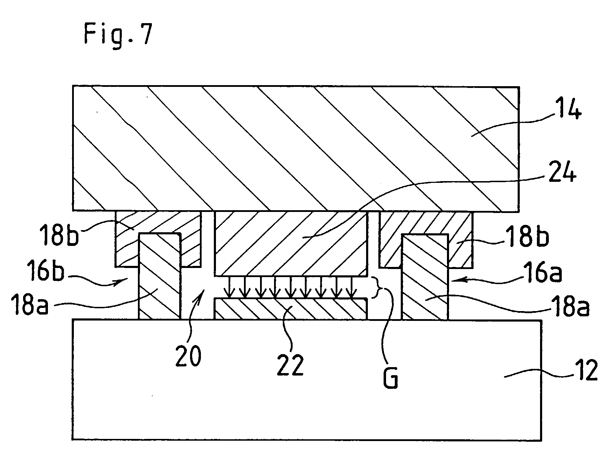

Meanwhile, there has been proposed to use a linear motor in place of a rotational type servo motor as a drive source of a feed device. An explanation will be given of an example in reference to Fig. 7. In Fig. 7, a moving body 14 built integrally with a work table, not illustrated, is guided to linearly move in a direction vertical to the paper face of Fig. 7 in respect of a base 12 by having moving legs 18b, fixed to the lower face of the moving body 14, ride on rails 18a fixed to the upper face of the base 12. Further, a fixed magnet body 22 is fixed on the upper face of the base 12, and a movable slider 24 comprising an armature is fixed to the lower face of the moving body 14, forming a linear motor 20 with the fixed magnet body 22 and the movable slider 24 disposed confronting each other through a predetermined gap G.

According to the above-described constitution, driving to operate the linear motor 20, magnetic flux from the fixed magnet body 22 is made to operate in the gap G, and the magnetic flux operates as a magnetic force for attracting the movable slider 24 in the downward direction. In order to increase the machining speed, the linear thrust of the linear motor 20 must be increased by increasing the magnetic force of the fixed magnet body 22. However, an increase in the magnetic force of the fixed magnet body 22 causes an increase in a component of the magnetic force operating in a direction orthogonal to the direction of the thrust force in the above-described gap G, and, as a result, a force attracting the movable slider 24 in the downward direction (toward the fixed magnet body 22), is increased.

Thus, an increase in the machining speed will cause an increase in a load to act on the rails 18a, fixed to the upper face of the base 12, through the moving legs 18b fixed to the lower face of the moving body 14, giving rise to a problem such that the thrust decreases due to the frictional loss. Thus, in order to resolve such a problem, there has already been suggested a direct measure or the like for reducing the frictional loss caused by the load by improving the inner mechanism of the linear guiding means comprising the moving legs 18b and the rails 18a. However, such a measure results in rises of new problems such as the increase in size, complication or the like of the linear guiding means, and, therefore, a proposal for more effective improvement has been sought.

### Disclosure of Invention

An object of the present invention is to prevent the loss of thrust caused by a frictional loss of a linear guiding mean for hinder machining efficiency, by providing a feed device with a linear motor drive device designed to prevent a large load from acting in a direction orthogonal to a direction of a generated thrust of a linear guiding means designed for allowing smooth linear motion of a moving body fixed to a movable slider comprising an armature.

In order to achieve the above-described object, according to the present invention, there is provided a linear motor drive type feed device in which a magnet body comprising a plurality of permanent magnet pieces arranged in a row and an electromagnetic coil body having plural phases, both constituting driving elements of a linear motor, of which one being attached to a fixed element and the other being fixed to a feed movement element, respectively and linear feed of the feed movement element is made by being driven in respect of the fixed element; a compensating magnet body is attached to either one of the fixed element and the feed movement element separately from the magnet body constituting the driving element of the linear motor, and a magnetic attraction force generated between the magnet body and the electromagnetic coil body, constituting the drive elements of the linear motor, is reduced by a magnetic attraction force generated between the compensating magnet body and a fixed element or a magnet body of a feed movement element to which the compensating magnet body is not attached.

### Brief Description of Drawings

Fig. 1 is a schematic front view showing the operating principle of a mechanism of a linear motor drive type feed device according to the present invention;
Fig. 2 is a side view showing Embodiment 1 of a linear motor drive type feed device according to the present invention;
Fig. 3 is a perspective view showing the essential constitution of Embodiment 2 of a linear motor drive type feed device according to the present invention;
Fig. 4 is a front view of the device shown in Fig. 3;
Fig. 5 is a perspective view showing the essential constitution of a modified example of Embodiment 2 shown in Fig. 3;
Fig. 6 is a sectional view of the device of Fig. 5; and
Fig. 7 is a schematic front view showing the operating principle of a mechanism of a conventional linear motor drive type feed device.

### Best Mode for Carrying Out the Invention

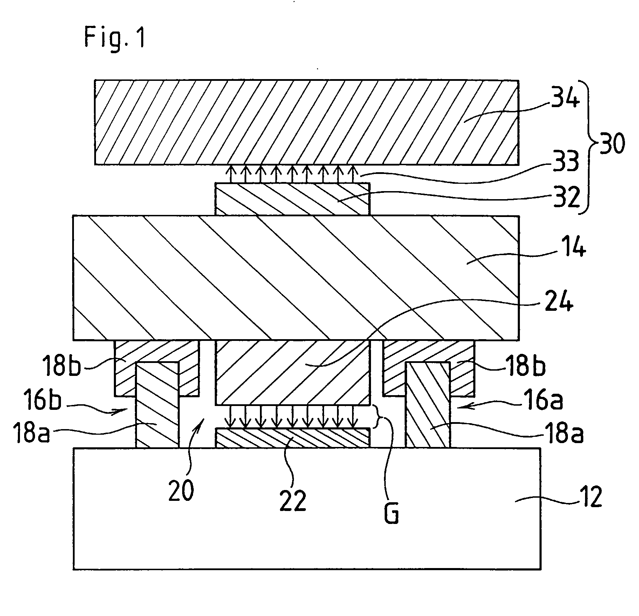

An explanation will be given of the operating principle of a mechanism of a linear motor drive type feed device according to the present invention in reference to Fig. 1.

According to the present feed device, a moving body 14 in direct contact or integrated with a work table, not shown, is installed above a base 12. The moving body 14 is supported by a known pair of left and right linear guiding means 16a and 16b installed on the upper face of the base 12 in a fashion such that the moving body 14 can be moved linearly in an axial direction vertical to the paper face of Fig. 1. The linear guiding means 16a and 16b comprise rails 18a extending in the direction of the linear movement of the moving body 14 and moving legs 18b which are linearly moved along the rails 18a. The rails 18a are fixed to the upper face of the base 12, and the moving legs 18b are fixed to the lower face of the moving body 14.

The linear movement of the moving body 14 in respect of the base 12, which is guided by the linear guiding means 16a and 16b, is carried out by a linear motor 20 provided between the moving body 14 and the base 12. The linear motor 20 is constituted of a fixed magnet body 22 fixed to the upper face of the base 12 and a movable slider 24 fixed to the lower face of the moving body 14 confronting the upper face of the fixed magnet body 22 through a gap G.

Although not shown in detail in Fig. 1, the fixed magnet body 22 comprises one row or two rows of a plurality of magnet pieces arranged above the base 12 through suitable support plates, not shown, in a direction aligned with the direction of the linear movement of the moving body 14 and the movable slider 24. The movable slider 24 includes a plurality of buit-in excitation windings to which three-phase excitation currents are supplied and cooling pipes for circulating a cooling fluid for cooling the movable slider 24 by absorbing heat generated during the operation of the motor.

When three-phase currents are supplied successively to the plurality of three-phase excitation windings in the movable slider 24, an electromagnetic interaction occurs between the excitation windings and magnetic fluxes of the fixed magnet body 22 by which a thrust is produced with the movable slider 24. The thrust produced with the movable slider 24 gives rise to the linear motion of the moving body 14 fixed with the movable slider 24, which is guided by the left and right linear guiding means 16a and 16b comprising the rails 18a and the moving legs 18b. As described above, a transmitting feed mechanism, which is indispensable for the conventional feed mechanism using a rotational type motor, is not required between the linear motor 20 and the moving body 14 in the case of the present invention. Further, the direction of linear movement, positive or negative, of the moving body 14 can be determined selectively by controlling the order in which the three-phase excitation currents is supplied.

When a work table on which a workpiece, an object of laser machining, is fixed to the moving body 14, and the moving body 14 is set for a biaxial linear motion in accordance with a program (In the example of Fig. 1, the base 12 is moved by using a separate linear motor in a direction orthogonal to the direction of movement of the moving body 14, that is, the left and right direction of the paper of Fig. 1), the workpiece is moved, in respect of a laser emitting unit (not shown) of a laser machining device, along a predetermined machining path on a plane. As a result, a laser beam for machining can be emitted against the workpiece whereby a predetermined laser machining such as cutting, chamfering, welding or the like is carried out.

According to the above-described constitution, when the linear motor 20 is operated for driving, magnetic fluxes emitted from the fixed magnetic body 22 operates in the gap G. The magnetic fluxes operate as a magnetic force for attracting the movable slider 24 in the downward direction, and, therefore, the moving body 14 and the moving legs 18b are simultaneously attracted towards the fixed magnet body 22. Consequently, the moving legs 18b constituting the linear guiding means 16a and 16b are forced towards the rails 18a, causing a frictional force to be produced between the moving legs 18b and the rails 18a. The frictional force operates to hinder the movement of the moving body 14 due to the thrust produced with the movable slider 24 of the linear motor 20 while being guided on the linear guiding means 16a and 16b.

Hence, in order to overcome such a drawback, according to the present invention, a magnet body 32 formed by arranging a plurality of permanent magnets is fixed to the upper face of the moving body 14 (face opposite to a face where the movable slider 24 is fixed) and a stationary magnet body 34 is arranged above the moving body 14 but separating therefrom. The stationary magnet body 34 is disposed above the moving body 14 at a position where the stationary magnet body 34 confronts the magnet body 32 fixed to the upper face of the moving body 14 through a narrow intervening gap 33.

Thus, magnetic line of force generated from the magnet 32 pass through the upper stationary magnet body 34 through the gap portion 33. As a result, a force is produced causing the moving body 14 fixed with the magnet body 32 to be attracted towards the stationary magnet body 34. The attracting force, produced by the magnetic line of force generated from the magnet body 32, becomes a force in a direction reverse to the direction of the attracting force exerted on the movable slider 24 and the moving body 14, which is produced by magnetic line of force generated from the fixed magnet body 22 of the linear motor 20. That is, the magnet body 32, the stationary magnetic body 34 and the intervening gap 32 constitute canceling magnetic force generating means 30 for generating the attracting force for canceling out the attracting force exerted on the moving body 14 by the linear motor 20.

As described above, according to the feed device of the present invention, there is provided the magnetic force generating means 30 for compensation, so that, in operating the linear motor 20, the frictional resistance caused by the magnetic attracting force, always acting on the linear guiding means 16a and 16b for supporting and guiding the moving body 14 (and the movable slider 24 of the linear motor 20), is canceled out.

Incidentally, the magnetic force, generated by the magnetic force generating means 30 for compensation, can be adjusted and changed by making variable physical conditions such as an area of generating the magnetic force of the magnetic body 32, a width of the gap portion 33, a density of magnetic fluxes generated by the magnet body 32 and the like. Thus, by previously setting at least one of the variable physical conditions such that the attraction force caused by the linear motors 20 is appropriately canceled to reduce the amount of load applied on the linear guiding means 16a and 16b, thereby enabling a smooth linear movement. In this case, also a load acting on the linear guiding means 16a and 16b due to the weights of the moving body 14, the movable slider 24 and the like can be canceled by the above-described magnetic force generating means for cancellation.

According to the above-described constitution in Fig. 1, the linear motor 20 is provided in a region below the moving body 14, and the magnetic force generating means 30 for compensation is provided in a region thereabove. It is equivalent, however, in view of the operating principle, to arranging the linear motor 20 in a region above the moving body 14 and arranging the magnetic force generating means 30 for compensation in a region therebelow. That is, with this arrangement too, the magnetic force caused by the linear motor 20 and operating in a direction intersecting the direction of the linear movement of the moving body 14 can be canceled by the magnetic force generating means 30 for compensation.

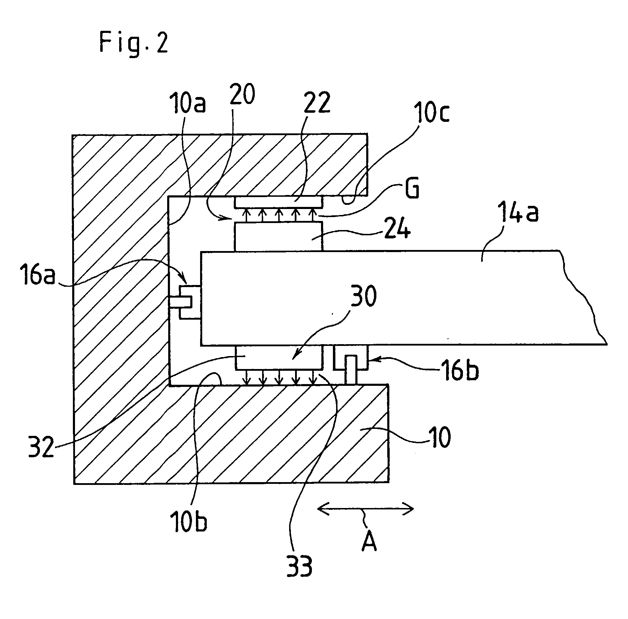

Here, an example of a feed device with its linear motor 20 arranged in the region above the moving body 14 and the magnetic force generating means 30 for compensation arranged in the region therebelow will be described in reference to Fig. 2.

In Fig. 2, numeral 10 designates an X-axis moving body that is moved by a linear motor, not illustrated, in X-axis direction, that is, a direction shown by an arrow A in Fig. 2, the section of which has a C-like shape. Linear guiding means 16b and 16a, movably supporting and guiding a Y-axis moving body 14a in Y-axis direction orthogonal to X-axis direction (a direction vertical to the paper face of Fig. 2), are fixed on an inner bottom face 10b and an inner side face 10a of the X-axis moving body 10. The X-axis moving body 10 and the Y-axis moving body 14a constitute, for example, a work table feed device of a laser machining device.

As illustrated by Fig. 2, the linear motor 20, as a drive source for linearly moving the Y-axis moving body 14a, is installed on the upper face of the Y-axis moving body 14a. The movable slider 24 is fixed to the upper face of one side end of the Y-axis moving body 14a and the fixed magnetic body 22 is fixed on an inner top face 10c of the X-axis moving body 10. The linear motor 20 is constituted by disposing the movable slider 24 and the fixed magnet body 22 opposite to each other through the gap G. The Y-axis moving body 14a is moved in Y-axis direction by the linear motor 20 while being guided by the linear guiding means 16a and 16b.

The magnet body 32 is fixed to the lower face of the one side face of the Y-axis moving body 14a and magnetic fluxes generated from the magnet body 32 pass through the X-axis moving body 10 comprising a magnetic body through a gap between the magnet body 32 and the inner bottom face 10b of the X-axis moving body 10. An effect for attracting the Y-axis moving body 14a towards the inner bottom face 10b of the X-axis moving body 10 is produced in the Y-axis moving body 14a, to which the magnet body 32 is fixed. The attraction force, caused by magnetic line of force generated from the magnet body 32, becomes a force reverse to the attraction force for attracting the movable slider 24 and the Y-axis moving body 14a, which is caused by magnetic line of force generated by the fixed magnet body 22 of the linear motor 20. Therefore, the magnet body 32, the inner bottom face 10b of the X-axis moving body 10 comprising a magnetic body and the gap 33 therebetween constitute the magnetic force generating means 30 for generating the attraction force for canceling the attraction force exerted on the Y-axis moving body 14a by the linear motor 20.

In this way, the frictional loss of the linear guiding means 16a and 16b, that is caused by the magnetic force generated by the fixed magnetic body 22 of the liner motor 20, can be reduced, and the feed device can be moved along the predetermined path with high speed and high accuracy by better utilizing operating characteristic of the linear motor 20.

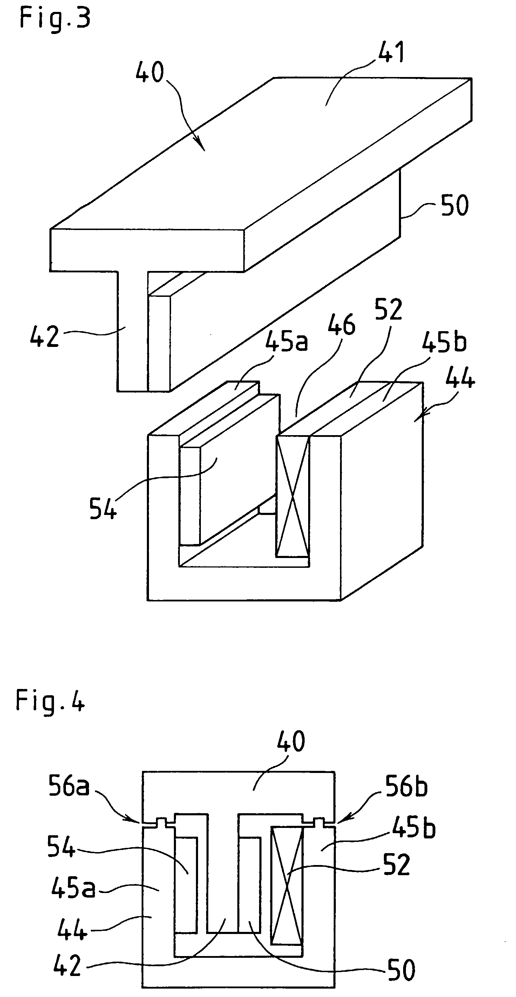

Next, another example of a linear motor drive type feed device will be described in reference to Fig. 3 and Fig. 4.

A movable element 40 constituting a feed device of a linear motor drive type is made from a magnetic material such as iron, which is formed into a table portion 41 and a beam portion 42 having a flat plate shape to have a section of a T-like shape. A fixed element 44 (or a machine element movable in Y-axis direction when the movable element 40 serves as a machine element movable in X-axis direction), coupled with the movable element 40 to support the movable element 40, have a U-like-shape cross section to provide a recessed portion 46 having an upward opening between left and right side wall portions 45a and 45b. Although the movable element 40 is prolonged in the feed direction depending on an amount of a feed stroke, the length of the fixed element 44 is comparatively short. A linear feed axis, not illustrated, is provided in a plane including the beam portion 42 having a flat plate shape.

A magnet body 50 is fixed to one face of the beam portion 42 of the movable element 40. Although the magnetic body 50 is not described in detail in Fig. 3 and Fig. 4, this magnetic body comprises a plurality of magnet pieces arranged in a linear feed direction as known already. Further, an electromagnetic coil body 52, having a plurality of phases and forming a linear motor drive element in corporation with the above-described magnet body 50, is attached to the inner face of a side wall portion 45b of the fixed element 44. The electromagnetic body 52 typically comprises a plurality of armature windings of three phases.

By successively exciting the coils of individual phases of the electromagnetic coil body 52, the movable element 40 is moved in a linear direction by the magnetic driving force in the linear direction generated by the confronting portions of the electromagnetic coil body 52 and the magnetic body 50.

When the movable element 40 moves in the linear direction in this way, the movable element 40 is magnetically attracted towards the side wall portion 45b of the fixed element 44 due to a magnetic attraction force occurring between the confronting portions of the magnet body 50 and the electromagnetic winding body 52. As a result, a moving load caused by frictional resistance acts on a linear guiding means mechanism (combinations of tenons and mortises 56a and 56b formed between the lower face of the table portion 41 of the movable element 40 and the upper end faces of the left and right side wall portions 45a and 45b of the fixed element 44 as shown in Fig. 4) interposed between the movable element 40 and fixed element 44, by which the linear movement or high speed linear motion of the movable element 40 is hindered.

Hence, according to the present embodiment, a permanent magnet body 54 as a magnet body for compensation is attached to the side wall portion 45a of the fixed element 44 confronting the side wall portion 45b with the electromagnetic coil body 52 attached thereto, thereby making the permanent magnet body 54 confront the electromagnetic coil body 52. The permanent magnet body 54 generates a magnetic attraction force between the permanent magnet body 54 and confronting face of the beam portion 42 of the movable element 40, since the movable element 40 is made of a magnetic material. The magnetic attraction force acts to cancel the magnetic attraction force acting orthogonal to the direction of movement of the movable element 40 between the driving magnetic body 50 and the electromagnetic coil body 52 of the linear motor.

Hence, the magnetic property and the arrangement of the permanent magnet body 54 are selected so that the magnetic attraction force of the permanent magnet body 54, operating between the beam portion 42 of the movable element 40 and the permanent magnet body 54, effectively cancels the magnetic attraction force operating between the driving magnet body 50 of the linear motor and the electromagnetic coil body 52. Since, the magnetic attraction force of the linear motor always acts on the portions of the driving magnet body 50 confronting the electromagnetic coil body 52, it is obviously to the purpose that the permanent magnet body 54 having dimensions and shape adapted to those of these portions is installed on the side wall portion 45a of the fixed element 44.

In this way, the movable element 40 will not be affected by the magnetic attraction force in a direction orthogonal to the direction of linear movement within the recessed portion 46 of the fixed element 44 by canceling the magnetic attraction force occurring between the driving magnetic body 50 and the electromagnetic coil body 52 of the linear motor by the effect of the magnetic attraction force occurring between the permanent magnet body 54 and the beam portion 42 of the movable element 40. As a result, the movable element 40 will not exert a pushing force, in the direction orthogonal to the direction of linear movement (left and right direction of Fig. 4), on the fixed element 44 at portions of linear guiding means 56a and 56b, the outlines of which are shown in Fig. 4, during a time period in which the movable element 40 is driven by the linear motor. Thus, a large frictional force will not be exerted on the linear guiding means 56a and 56b, so that the above-described linear guiding means 56a and 56b can expedite the smooth and high-speed linear movement of the movable element 40. Incidentally, the linear guiding means can also be installed between the inner bottom wall of the fixed element 44 and the lower end of the beam portion 42 of the movable element 40.

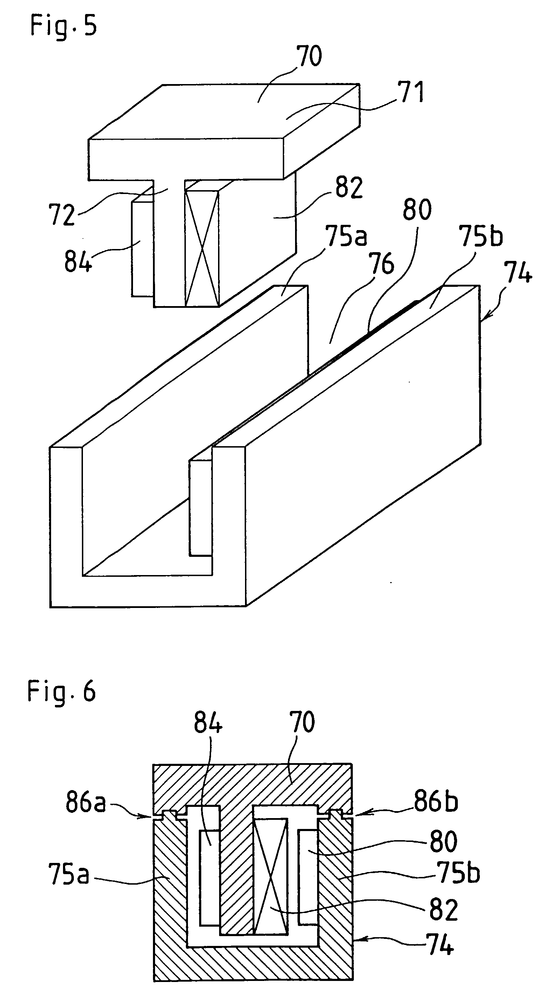

Next, an explanation kill be given of a modified example of the linear motor drive type feed device shown in Fig. 3 and Fig. 4, referring to Fig. 5 and Fig. 6.

According to this embodiment, similar to the case of the embodiment of Fig. 3 and Fig. 4, a movable element 70 having a section of a T-like shape is constituted by a table portion 71 and a beam portion 72 of a flat plate shape, and a fixed element 74, coupled with the movable element 70 for supporting the movable element 70, has a section of a U-like shape and a recessed portion 76 having an opening in the upward direction disposed between left and right side wall portions 75a and 75b. However, in the case of this example, the lengths of the table portion 71 and the beam portion 72 having a flat plate shape in the direction of movement are comparatively short while the fixed element 74 has a longer dimension in the direction of linear movement of the movable element 70.

Further, according to this example, an electromagnetic coil body 82 is attached to one side face of the beam portion 72 of the movable element 70, and a permanent magnet body 84 for compensation is attached to the other side face thereof. Further, a magnet body 80 for generating the driving force of the linear motor in cooperation with the electromagnetic coil body 82, is disposed on an inner face of one of side walls 75b of the fixed element 74 and at a position confronting the electromagnetic coil body 82.

Thus, the driving magnetic attraction force operating orthogonal to the direction of the linear movement, which is generated when operating the magnetic body 80 and the electromagnetic coil body 82 for driving, is canceled by the magnetic attraction force occurring between the permanent magnet body 84 for compensation and the other one of side walls 75a of the fixed element 74. As a result, the movable element 70 will not exert pushing force in the direction orthogonal to the direction of linear movement (left and right direction of Fig. 6) on the fixed element 74 at portions of linear guiding means 86a and 86b, as schematically illustrated in Fig. 6, during a time period through which the movable element 70 is driven by the linear motor. Thus, a large frictional force will not be generated with the linear guiding means 86a and 86b, so that the linear guiding means 86a and 86b can expedite smooth and high-speed linear movement of the movable element 40.

Furthermore, according to the embodiments illustrated in Fig. 3 through Fib. 6, the magnet body and the electromagnetic coil body of the linear motor are disposed in planes being parallel to each other with respect to their vertical faces in the case where the movable body is linearly moved in a horizontal plane; however, it is obvious that the operation and effect substantially similar to those in the above-described embodiments can be obtained even with the constitution in which the movable element is linearly moved in a vertical plane while the magnetic body and the electromagnetic coil body of the linear motor are arranged in planes being parallel to each other with respect to their horizontal faces.

As described above, according to the present invention, a piece of a permanent magnet having relatively small dimensions is attached to either one of a movable element and a fixed element so that such a permanent magnet piece serves as a magnet body for compensation, by which the frictional resistance occurring with portions of the linear guiding means 86a and 86b due to the magnetic attraction force generated in driving the linear motor (and the load of the movable element) is alleviated, and, as a result, smooth and high-speed linear driving of the movable element of the linear motor can be achieved easily and at a low cost.

## Claims

1. A feed device of a linear motor drive type, comprising a magnet body with a plurality of permanent magnet pieces arranged in a row and an electromagnetic coil body having a plurality of phases, both constituting driving elements of a linear motor, either one of which being attached to a fixed element and other being attached to a feed movement element, respectively, and a linear feed of the feed movement element with respect to the fixed element being driven through linear guiding means formed therebetween;
wherein a compensating magnet body is attached to either one of the fixed element and the feed movement element separately from the magnet body constituting the driving element of the linear motor; and
a magnetic attraction force, generated between the magnetic body and the electromagnetic coil body constituting the driving elements of the linear motor, is canceled by a magnetic attraction force generated between the compensating magnetic body and a magnetic body of either one of the fixed element or the feed movement element to which the compensating magnetic body is not attached.

2. The feed device of a linear motor drive type according to Claim 1, wherein said fixed element comprises a magnetic body element having a section in a U-like shape and opening upward, and said feed movement element comprises a magnetic body element having a section in a T-like shape provided with a flat plate portion projecting into a recessed portion of the fixed element;
an electromagnetic coil body constituting the driving element of the linear motor is attached to an inner side face of one of side walls of the fixed element;
the magnetic body constituting the driving element of the linear motor is attached to a side of a flat-plate portion of the feed movement element, which projects into the recessed portion of said fixed element, said side of the flat-plate being opposite to said side wall of the fixed element;
said compensating magnetic body is attached to the inner face of a side wall of the fixed element, said side wall being one not provide with the electromagnetic coil body; and
the magnetic attraction force generated between the magnet body and the electromagnetic coil body, constituting the driving elements of the linear motor, is canceled by a magnetic attraction force generated between the compensating magnetic body and the flat plate portion of the feed movement element projecting into the recessed portion of the fixed element.

3. The feed device of a linear motor drive type according to Claim 1, wherein the fixed element comprises a magnetic body element having a section in a U-like shape and opening upward and said feed movement element comprises a magnetic body element having a section in a T-like shape provided with a flat plate portion projecting into a recessed portion of the fixed element;
the magnet body constituting the driving element of the linear motor is attached to an inner side face of a side wall of the fixed element;
wherein the electromagnetic coil body constituting the driving element of the linear motor is attached to a side of a flat plate portion of the feed movement element, which projects into the recessed portion of said fixed element, said side of the flat-plate confronting said side wall of the fixed element;
said compensating magnetic body is attached to a side of the flat-plate portion of said feed movement element, which projects into the recessed portion of said fixed element, said side being opposite to the side provided with the electromagnetic coil body;
the magnetic attraction force generated between the magnetic body and the electromagnetic coil body constituting the driving elements of the linear motor is canceled by a magnetic attraction force generated between the compensating magnetic body and a side wall of the fixed element other than the side wall to which magnet body constituting the driving element of the linear motor is attached.

4. The feed device of a linear motor drive type according to Claim 1, wherein the electromagnetic coil body having the plural phases is fixed to the feed movement element in a form of the electromagnetic coil body built in a movable slider.

5. The feed device of a linear motor drive type according to Claim 4, wherein the movable slider includes cooling pipes for circulating a cooling fluid for absorbing a heat generated by the electromagnetic coil body besides the electromagnetic coil body having the plural phases.

6. The feed device of a linear motor drive type feed device according to Claim 4 or Claim 5, wherein the movable slider is directly connected to or integrated with a work table mounted with a work to be machined by a laser machining device.

7. The feed device of a linear motor drive type feed device according to Claim 1, wherein the feed movement element serves as a second axis moving body constituting a mechanism for moving a work table mounted with a workpiece to be machined by a machining device in two directions, namely, a first axis direction and a second axis direction orthogonal to the first axis direction, while the fixed element constitutes a first axis moving body constituting the mechanism for moving the work table.

8. The linear motor drive type feed device according to Claim 6, wherein the movable slider including the electromagnetic coil body is attached to either upper face or a lower face of the second axis moving body, and the compensating magnetic body is attached to other face thereof, respectively, and the magnet body constituting the driving element of the linear motor is attached to a face of the first axis moving body opposite to a face to which the movable slider of the second axis moving body is attached.
